# FASCICULE DE BREVET EUROPEEN

(11) **EP 2 708 385 B1**
(45) Date de publication et mention de la délivrance du brevet: **08.04.2015**
(21) Numéro de dépôt: 13175598.5
(22) Date de dépôt: 08.07.2013
(51) Int. Cl.: B60C 27/02, B60C 27/06, B60C 27/08, B60C 27/10

(54) **Dispositif à fixer sur une roue de véhicule, afin d'améliorer son adhérence sur des sols**
Vorrichtung zur Befestigigung auf einem Fahrzeugrad zur Verbesserung der Bodenhaftung
Device for securing to a vehicle wheel, to improve its adhesion to floors

(30) Priorité: 18.09.2012 FR 1202471
(43) Date de publication de la demande: 19.03.2014
(73) Titulaire: Sananes, Georges, 95603 Eaubonne Cedex (FR)
(72) Inventeur: Sananes, Georges, 95603 Eaubonne Cedex (FR)

(56) Documents cités:
- WO-A1-91/12147
- US-A- 1 399 179
- US-A- 1 446 074
- US-A- 1 515 491
- US-A- 4 192 367

## Description

La présente invention concerne un dispositif à fixer sur les roues des véhicules équipées de pneumatiques afin d'améliorer leur adhérence sur des sols meubles, enneigés ou verglacés.

Une roue comprend typiquement une jante, généralement en métal, sur laquelle un pneumatique est solidarisé. Le pneumatique a pour vocation d'être en contact avec la route, sur ce qui est appelé la bande de roulement du pneumatique. Une adhérence trop élevée entre le pneumatique et la route générerait trop de frottements, et donc une usure rapide du pneumatique, tandis qu'une adhérence trop faible provoquerait des glissements indésirables voire dangereux sur la route. C'est pourquoi les pneumatiques présentent en général une adhérence moyenne, et un dispositif supplémentaire, rapporté sur la roue, pour augmenter l'adhérence dans les situations délicates est souhaitable.

Les dispositifs traditionnels comprennent généralement une nappe d'accrochage unique, constituée d'un lacis de maillons métalliques qui se fixe par une mise en tension autour de la roue, sans être strictement solidaire de celle-ci, de sorte que les risques que la nappe d'accrochage d'une part ripe longitudinalement sur le pneumatique et d'autre part se décentre radialement par rapport à la bande de roulement lors de déplacement du véhicule sont élevés. Par ailleurs, leur mise en oeuvre est rendue laborieuse quand la circonférence de la roue n'est que partiellement accessible, c'est-à-dire quand celle-ci se trouve ensablée, prise dans la neige, voire à mi-essieu, ou simplement en appui sur le sol. En effet, il est alors fastidieux de ceinturer la nappe d'accrochage autour de la roue alors que son périmètre n'est que partiellement accessible.

Des dispositifs connus sont divulgués dans les documents US-A-1446074 et US-A-1399179.

Il existe donc un besoin pour un nouveau dispositif à fixer sur une roue de véhicule, afin d'améliorer son adhérence sur la route, permettant notamment de remédier à ces différents inconvénients et contraintes.

Selon un premier objet, l'invention propose un dispositif à fixer sur une roue de véhicule, afin d'améliorer son adhérence sur la route assurant une bonne tenue de la nappe d'accrochage sur le pneumatique pendant le déplacement du véhicule.

Selon un deuxième objet, l'invention propose un dispositif à fixer sur une roue de véhicule, afin d'améliorer son adhérence sur la route dont le montage sur la roue est facilité.

Selon un troisième objet, l'invention propose un dispositif à fixer sur une roue de véhicule, afin d'améliorer son adhérence sur la route, permettant d'assurer une continuité de la nappe d'accrochage sur l'ensemble du pneumatique.

A cet effet, l'invention propose un dispositif à fixer sur une roue de véhicule, afin d'améliorer son adhérence sur des sols meubles, enneigés ou verglacés ou pentus, la roue comprenant une jante et un pneumatique, le dispositif comprenant au moins deux modules élémentaires identiques entre eux, qui se fixent indépendamment les uns des autres sur le pourtour de la jante de la roue. Chaque module élémentaire comprend :
- un étrier externe et un étrier interne pour la fixation respectivement sur les flancs externe et interne de la jante de la roue,
- des moyens d'assemblage avec au moins un autre module élémentaire.

Chaque module élémentaire comprend en outre au moins une nappe d'accrochage fixée d'une part à l'étrier interne et d'autre part à au moins un ressort de tension, qui est solidaire d'un levier de tension articulé sur l'étrier externe, et dont la mise en tension autour du pneumatique de la roue s'opère par le basculement du levier de tension sur le voile de la jante.

Ainsi, le montage de chaque module élémentaire sur la jante peut se faire indépendamment des autres modules élémentaires, par un simple mouvement de basculement du levier de tension, l'accès complet à l'ensemble de la circonférence de la roue n'étant pas requis. Il suffit de monter un premier module élémentaire sur la roue, de faire pivoter la roue pour rendre accessible une portion nue du pneumatique, monter un deuxième module élémentaire, et ainsi de suite jusqu'à habiller complètement le pneumatique. La mise sous tension de la nappe d'accrochage procure un contact intime entre la bande de roulement du pneumatique et la nappe d'accrochage, limitant les risques que la nappe d'accrochage ripe, se décentre pendant le déplacement du véhicule. Enfin, les modules élémentaires sont assemblés entre eux, permettant aux nappes d'accrochage de former une surface d'adhérence continue.

Selon un exemple de réalisation, les moyens d'assemblage comprennent d'une part une broche d'assemblage tenue par deux ou plusieurs anneaux d'ancrage enserrant chacun une gorge intérieure de la broche d'assemblage, et d'autre part deux anneaux de verrouillage, les anneaux de verrouillage d'un premier module élémentaire s'engageant chacun sur une gorge extérieure de la broche d'assemblage d'un deuxième module élémentaire, permettant l'assemblage du premier module et du deuxième module entre eux.

Ainsi, les nappes d'accrochage des modules élémentaires successifs et adjacents forment une surface d'adhérence continue.

En particulier, lorsque les nappes d'accrochage sont de type chaînes, la coopération entre les broches d'assemblage et les anneaux d'ancrage constitue un maillon intermédiaire entre les deux modules, assurant la continuité de la surface d'adhérence.

De préférence la broche d'assemblage se présente sous la forme d'un profilé ayant une section transversale comportant deux languettes opposées, chacune de ses deux portions extrêmes comportant une gorge extérieure, formant chacune un rétrécissement de la section transversale de la broche d'assemblage et dans lequel l'anneau de verrouillage comprend une lumière oblongue dont une première dimension, selon le grand axe, est supérieure à la dimension de la section transversale de la broche d'assemblage mesurée sur les deux languettes, la lumière présentant une section élargie, pour l'introduction de la broche d'assemblage dans la lumière et une section rétrécie, pour le blocage de la broche d'assemblage sur la gorge extérieure.

La broche d'assemblage ne peut coulisser au travers de l'anneau de verrouillage que si l'axe passant par les languettes de la broche d'assemblage est confondu avec l'axe longitudinal de l'anneau de verrouillage.

Dans ce cas, la gorge extérieure de la broche d'assemblage est bridée à l'intérieur de l'anneau de verrouillage quand l'axe des languettes de la broche d'assemblage et l'axe longitudinal de l'anneau de verrouillage sont orthogonaux.

Selon un autre exemple de réalisation, la nappe d'accrochage comprend deux éléments. Les moyens d'assemblage comprennent alors avantageusement une platine de verrouillage fixée au ressort de tension, munie d'une ouverture oblongue, fixée à une première extrémité d'un premier élément de la nappe d'accrochage et un anneau final surmonté d'une barrette et fixé à une première extrémité du deuxième élément de la nappe. Les deuxièmes extrémités des deux éléments de la nappe d'accrochage sont fixées à une platine de liaison elle-même fixée à l'étrier interne. L'assemblage de deux modules est alors obtenu par la coopération entre l'ouverture oblongue dans la platine de verrouillage d'un premier module et l'anneau final surmonté de la barrette d'un deuxième module.

Selon un exemple de réalisation, chaque module comprend un ou plusieurs boulons d'assemblage passant chacun au travers d'un tube d'assemblage aux embouchures tronconiques, le tube d'assemblage étant apte à être solidaire de la jante et à la traverser de part en part, ou positionné en sous-face de la jante, se vissant sur l'étrier interne de manière à fixer le module sur la jante.

Les tubes d'assemblage, qui peuvent être identiques entre eux, traversant la jante de part en part ou disposés entre la jante et le voile, c'est-à-dire en sous-face de la jante, sont avantageusement distribués à intervalles angulaires réguliers de telle sorte que chaque module élémentaire peut occuper indifféremment toute position de fixation sur la jante de la roue.

De plus, chaque module peut comprendre un câble de sécurité dont les extrémités fixées à celles du ressort de tension en limite l'allongement.

De préférence, chaque module comprend des moyens de blocage du basculement du levier de tension lorsque la nappe d'accrochage est mise sous tension.

Le levier de tension ne peut alors plus basculer dans l'autre sens, et relâcher la tension sur la nappe d'accrochage, de manière indésirable, par exemple sous l'effet de chocs et / ou de vibrations lors du déplacement du véhicule sur la route.

En variante, l'étrier externe peut intégrer un écrou prisonnier sur lequel se visse un boulon assurant la fixation du levier de tension.

Selon un exemple de réalisation, la nappe d'accrochage de chaque module élémentaire comprend au moins une maille de serrage dont une extrémité est fixée à un anneau solidaire de l'étrier interne et l'extrémité opposée à un ou plusieurs ressorts de tension solidaires d'un levier de tension.

La maille de serrage permet d'ajuster la tension à appliquer à la nappe d'accrochage, laquelle se resserre au niveau de la maille de serrage sous l'effet de la mise sous tension. L'arc longitudinal de la nappe d'accrochage peut ainsi être adapté à la circonférence de la roue. En effet, plus l'effort de serrage est important, plus la maille de serrage se referme sur elle-même et moins la nappe ne s'étend angulairement sur la roue.

D'autres avantages apparaîtront à la lumière de la description accompagnée des figures dans lesquelles :
La figure 1 est une vue d'une face externe d'une roue d'un véhicule munie d'un module d'un dispositif à fixer sur la roue, afin d'améliorer son adhérence sur des sols meubles, enneigés ou verglacés ou pentus.
La figure 2 est une vue d'une face interne de la roue de la figure 1.
La figure 3 est une vue en coupe partielle de la jante de la roue de la figure 1, dans un plan parallèle à son axe de rotation.
La figure 4 est une vue en plan de l'about courant d'une broche d'assemblage pour l'assemblage de deux modules entre eux.
La figure 5 représente une coupe transversale courante de la broche d'assemblage de la figure 4, avec son axe de symétrie AA passant par le plan des languettes.
La figure 6 représente une coupe transversale sur une gorge intérieure de la broche d'assemblage de la figure 4.
La figure 7 représente une coupe transversale sur une gorge extérieure de la broche d'assemblage de la figure 4.
La figure 8 représente un anneau d'ancrage enserrant la gorge intérieure de la broche d'assemblage de la figure 4.
La figure 9 représente un anneau de verrouillage, avec son axe de symétrie BB, la broche d'assemblage de la figure 4 étant en position de verrouillage.
La figure 10 représente la position respective de l'anneau de verrouillage de la figure 9 et de la broche d'assemblage de la figure 4 en configuration d'assemblage.
La figure 11 représente une vue à plat sur la bande de roulement d'un pneumatique et d'une nappe d'accrochage complète d'un module assemblée avec la nappe d'accrochage de deux autres modules représentés partiellement.
La figure 12 est une vue de l'anneau final avec son axe de symétrie CC, et de la barrette verrouillage, avec son axe longitudinal DD.
La figure 13 est une vue en coupe longitudinal de l'anneau final et de la barrette de la figure 12.
La figure 14 est une vue à plat sur la bande de roulement d'un pneumatique, d'un module assemblé à deux autres modules représentés partiellement, par les moyens d'assemblage des figures 12 et 13, et dont les attaches aux étriers externe et interne des nappes d'accrochage sont alternées.
La figure 15 représente un étrier externe d'un module.

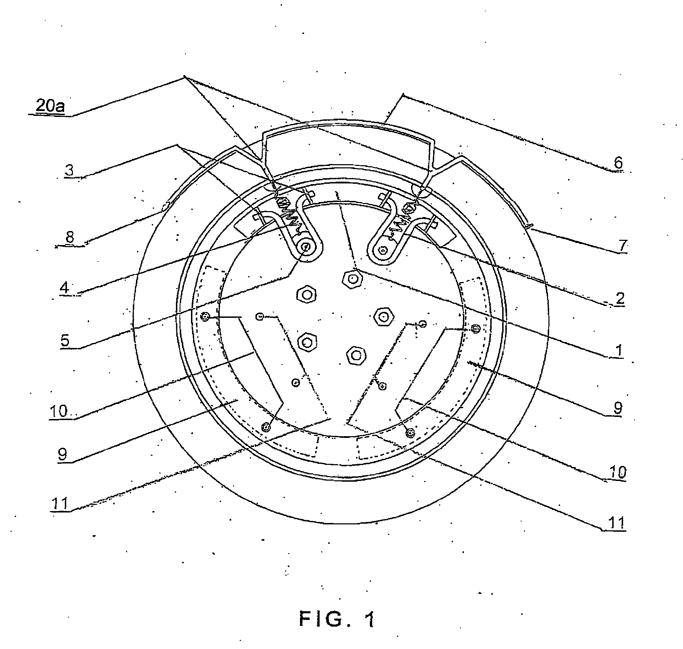

Sur la figure 1 notamment, il est représenté un dispositif à fixer sur la roue d'un véhicule, afin d'améliorer son adhérence sur des sols meubles, enneigés ou verglacés ou pentus.

Le dispositif comprend des modules élémentaires, identiques entre eux qui se distribuent à intervalles réguliers sur la circonférence de la roue indépendamment les uns des autres, et qui d'une part se fixent de part et d'autre sur les flancs de la jante, et d'autre part s'assemblent entre eux deux à deux et constituent une continuité des éléments grippant sur la totalité de la circonférence de la bande de roulement de la roue. Par éléments grippant, on entend ici tout élément permettant de modifier l'adhérence de la bande de roulement du pneumatique. Par exemple, il pourra s'agir d'éléments de type chaînes, ou encore de type crampons ou picots, ou simplement un matériau dont les caractéristiques d'adhérence avec la route sont recherchées.

Par sa conception même, le dispositif comporte au moins deux modules élémentaires. Dans la description qui suit, le dispositif comprend trois modules, mais il pourra en comporter un nombre quelconque.

La conception par modules élémentaires permet de mettre aisément en oeuvre le dispositif dans son intégralité, particulièrement dans les situations difficiles. En effet, un premier module élémentaire est monté et fixé sur le secteur de la roue non en appui sur le terrain, puis par une faible rotation de la roue, il est possible de rendre accessible un secteur libre suivant afin de monter, de fixer un deuxième module élémentaire et de le verrouiller au module précédent, puis de réitérer le processus jusqu'au montage de tous les modules élémentaires que comprend le format du dispositif, le dernier module élémentaire se verrouillant sur chacun des deux modules élémentaires entre lesquels il s'insère.

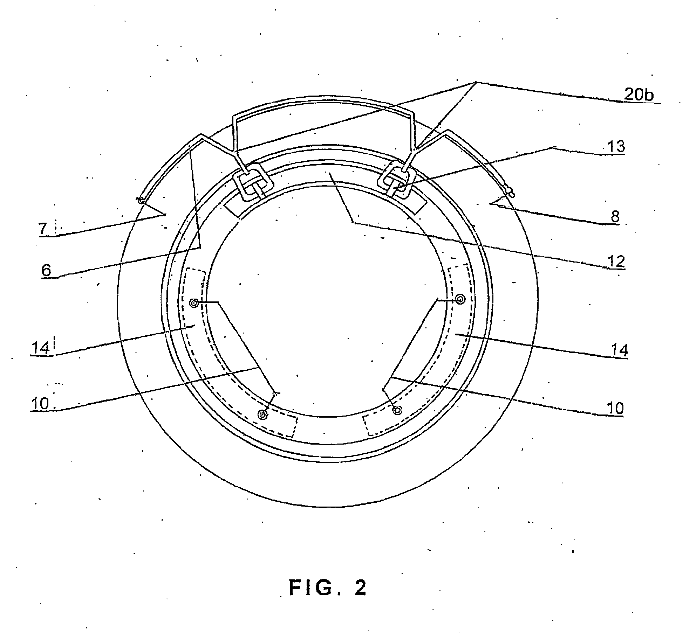

Chaque module élémentaire comporte sa propre nappe **6** d'accrochage, un étrier **1** externe et un étrier **12** interne, tous deux en arc de cercle épousant la forme de la jante destinée à les recevoir. Sur la figure 1 et la figure 2, un seul module élémentaire est représenté monté sur la roue. Les emplacements **9** des deux autres modules élémentaires sont identifiés par des traits discontinus. L'étrier **1** externe se fixe sur le flanc de la face externe de la jante, et l'étrier **12** interne sur le flanc de la face interne de la jante. L'étrier **1** externe et l'étrier **12** interne d'un même module élémentaire sont assemblés entre eux, par exemple par un ou plusieurs boulons **15** d'assemblage. Chaque boulon **15** d'assemblage passe à l'intérieur d'un tube **10** d'assemblage aux embouchures tronconiques traversant les flancs de la jante de part en part et solidaire de celle-ci, et se visse sur un écrou tronconique solidaire de la face interne de l'étrier **12** interne.

Les tubes **10** d'assemblage sont distribués à intervalles réguliers sur les flancs de la jante de telle sorte que tout module élémentaire peut occuper indifféremment toute position de fixation sur la jante.

L'étrier **1** externe comporte un ou plusieurs leviers **2** de tension, chaque levier **2** de tension étant articulé sur une paire de goussets **3** solidaires de l'étrier **1** externe et formant un axe de basculement pour le levier **2** de tension. Selon un mode de réalisation particulier, chaque levier **2** de tension est relié à un ressort **4** de tension.

Par exemple, une extrémité du ressort **4** de tension est fixée au levier **2** de tension, et l'autre extrémité du ressort **4** de tension est fixée à une première extrémité **20a** d'une maille **20** de serrage intégrée dans la nappe **6** d'accrochage. L'autre extrémité **20b** de la maille **20** de serrage est directement raccordée à un anneau **13** solidaire de l'étrier **12** interne.

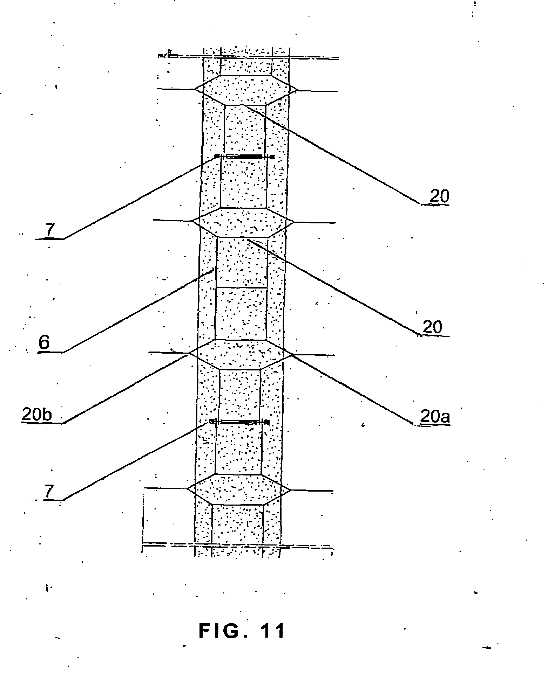

Plus précisément, selon un exemple illustré notamment sur la figure 11, la maille **20** de serrage se présente sous la forme d'un polygone, par exemple à six côtés, et dont les extrémités **20a** et **20b** correspondent à des sommets opposés du polygone.

La traction transmise à une maille **20** de serrage par un ressort **4** de tension lors du basculement du levier **2** de tension sur le voile de la roue, tend à la refermer sur elle-même, ce qui se traduit par la mise en tension de la nappe **6** d'accrochage autour la roue.

Chaque levier **2** de tension peut être fixé sur le voile de la roue par un ou des boulons **5** de fixation se vissant dans des orifices d'écrous **11** solidaires du voile. Selon un mode de réalisation avantageux, l'étrier **1** externe intègre déjà au moins un écrou sur lequel se visse un boulon **5** assurant la fixation du levier **2** de tension.

Chaque nappe **6** d'accrochage comporte des moyens d'assemblage avec au moins un autre module élémentaire. Selon un mode particulier de réalisation, les moyens d'assemblage comprennent d'une part une broche **7** d'assemblage disposée à une première extrémité longitudinale et d'autre part deux anneaux **8** de verrouillage disposés chacun à une deuxième extrémité longitudinale du module, de sorte que la broche **7** d'assemblage d'un premier module coopère avec les anneaux **8** de verrouillage d'un deuxième module.

Plus précisément, la broche **7** d'assemblage se présente sous la forme d'un profilé. Chacune des deux portions extrêmes de la broche **7** d'assemblage comporte deux gorges **16,** et **17,** formant chacune un rétrécissement de la section transversale de la broche **7.** Ainsi, la broche **7** d'assemblage comporte quatre gorges. Deux gorges **16** dites intérieures sont placées entre deux autres gorges **17** dites extérieures, plus proches des extrémités de la broche **7** d'assemblage. Les gorges **16** intérieures ont une section radiale rectangulaire, et chacune d'elles est enserrée dans un anneau **18** d'ancrage du module qui interdit à la broche **7** d'assemblage toute rotation sur son axe longitudinal par rapport à l'anneau **18** d'ancrage. Par construction le plan passant par les languettes **19** est maintenu par les anneaux **18** d'ancrage perpendiculairement au plan de la bande de roulement de la roue. Les gorges extérieures **17** ont une section radiale circulaire.

La broche **7** d'assemblage comporte de plus deux languettes **19,** s'étendant au moins partiellement le long de la broche **7** d'assemblage de part et d'autre des gorges **17** extérieures. De préférence, les languettes **19** sont présentes sur tout le long de la broche **7** d'assemblage, à l'exception des gorges **16** et **17.** En outre, les languettes **19** sont symétriques l'une de l'autre par rapport à un plan passant par l'axe longitudinal de la broche **7** d'assemblage. En d'autres termes, il existe un axe **AA** passant par les languettes **19,** coupant perpendiculairement l'axe longitudinal de la broche **7** d'assemblage.

Chaque anneau **8** de verrouillage présente une lumière **8a** oblongue, qui s'étend selon son axe **BB** longitudinal, dont une première dimension, selon le grand axe, est supérieure à la dimension de la section transversale de la broche **7** mesurée sur les deux languettes **19,** tandis que la deuxième dimension de la lumière **8a** est inférieure à cette même dimension. La lumière **8a** oblongue présente une portion **8b** élargie dont la deuxième dimension est, de plus, supérieure à la dimension de la section transversale de la broche **7** d'assemblage hors languettes **19.** La lumière **8a** oblongue présente en outre une portion **8c** rétrécie dont la deuxième dimension est inférieure à la dimension de la section transversale de la broche **7** d'assemblage hors languettes **19,** mais supérieure à la dimension de la section transversale de la gorge **17** extérieure.

Le raccordement entre deux modules voisins s'opère par le verrouillage des anneaux **8** de verrouillage d'un premier module sur les gorges **17** extérieures de la broche **7** d'assemblage d'un deuxième module.

L'introduction d'une extrémité de la broche **7** d'assemblage au travers d'un anneau **8** de verrouillage ne peut s'opérer que si, d'une part l'axe longitudinal de la broche **7** d'assemblage passe par le centre de la portion **8b** élargie de la lumière **8a** oblongue de l'anneau **8** de verrouillage et est perpendiculaire au plan de cette lumière **8a,** et d'autre part que l'axe **AA** passant par les languettes **19** est parallèle à l'axe **BB** longitudinal de la lumière **8a** oblongue de l'anneau **8** de verrouillage.

L'engagement de l'anneau **8** de verrouillage jusqu'à ce que la portion **8c** rétrécie vienne autour de la gorge **17** extérieure de la broche **7** d'assemblage, permet le verrouillage entre ces deux éléments par la rotation à 90° de l'axe longitudinal **BB** de l'anneau **8** de verrouillage par rapport à l'axe AA des languettes **19.** Lors de la mise en tension des nappes **6** d'accrochage entre elles, les gorges **17** extérieures des broches **7** d'assemblage se positionnent en butée à l'extrémité des lumières **8a** oblongues des anneaux **8** de verrouillage, ailleurs que sur la portion **8b** élargie. Dans cette position finale, les languettes **19** brident les anneaux **8** de verrouillage à l'intérieur des gorges **17** extérieures.

Les extrémités d'un ressort **4** de tension peuvent être reliées entre elles par un câble de sécurité en acier logé à l'intérieur de ses spires. La fonction des câbles de sécurité est de limiter strictement l'allongement des ressorts **4** de tension. Cette limitation assure d'une part la conservation du centrage radial et l'adhérence des nappes **6** d'accrochage sur la bande de roulement de la roue, et interdit d'autre part tout accroissement du périmètre de l'assemblage des nappes **6** d'accrochage entre elles au-delà d'un seuil qui permettrait le déverrouillage entre nappes **6** d'accrochage par la rotation à 90° de la broche **7** d'assemblage sur son axe longitudinal.

Les dessins annexés illustrent l'invention, appliquée à un dispositif comprenant trois modules élémentaires, deux leviers **2** de tensions par étrier **1** externe, ce qui induit deux mailles **20** de serrage par nappe **6** d'accrochage, ainsi que deux boulons **15** d'assemblage entre couple d'étrier **1** externe et étrier **12** interne. Dans ce format, chaque module élémentaire couvre donc un arc d'angle α de cent vingt degrés (360° / 3 = 120°) sur la bande de roulement de la roue, et donc l'angle séparant deux tubes d'assemblage voisins est alors de soixante degrés, (360° / (3 x 2) = 60°).

Toutefois, ces valeurs d'angle pourront être adaptées en fonction du nombre de modules. Par exemple, pour quatre modules, l'angle α couvert par un module est de 90°. Le nombre de leviers **2** de tension par module pourra également être adapté, notamment en fonction du nombre de maille **20** de serrage par nappe **6** d'accrochage.

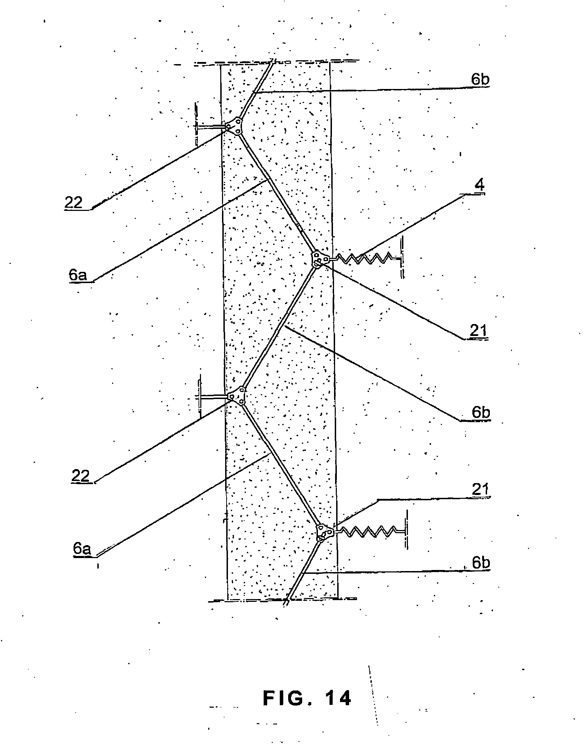

En variante, illustrée notamment sur la figure 14, la nappe **6** d'accrochage comporte en propre qu'un unique levier **2** de tension, dont seul un ressort **4** de tension est représenté. Dans cette configuration, la nappe **6** d'accrochage est réduite à deux éléments, à savoir un premier, **6a,** fixé à l'une de ses extrémités à une platine **21** de verrouillage elle-même fixée au ressort **4** de tension, et son autre extrémité à une platine **22** de liaison elle-même fixée à l'anneau **13** de fixation de l'étrier **12** interne; et un second élément, **6b** fixé à une de ses extrémités à la platine **22** de liaison, comporte à son autre extrémité libre un anneau **23** final surmonté d'une barrette **24** de verrouillage. Ainsi, la fixation de la nappe **6** d'accrochage est alternée entre d'une part l'étrier **1** externe par la platine **21** de verrouillage et d'autre part l'étrier **12** interne. L'anneau **23** final et la barrette **24** de verrouillage forment alors des moyens d'assemblage avec un autre module. Par construction, les axes longitudinaux **DD** des barrettes **24** de verrouillage sont disposés perpendiculairement aux axes **CC** longitudinaux des anneaux **23** finaux. L'assemblage entre nappes **6** d'accrochage de deux modules s'opère alors par l'introduction de la barrette **24** de verrouillage d'une première nappe **6** d'accrochage au travers de la lumière oblongue de la platine **21** de verrouillage d'une deuxième nappe **6** d'accrochage. Le verrouillage entre nappes **6** d'accrochage s'opère sous l'effet de la traction transmise aux anneaux **23** finaux par les platines **21** de verrouillage, lors du basculement des leviers **2** de tension sur le voile de la roue, les axes longitudinaux **CC** des anneaux **23** finaux s'alignant alors avec les axes longitudinaux des lumières oblongues des platines **21** de verrouillage auxquelles ils sont assemblés, et les axes longitudinaux **DD** des barrettes **24** de verrouillage se positionnent perpendiculairement aux axes longitudinaux respectifs des lumières oblongues des platines **21** de verrouillage, empêchant les barrettes **24** de verrouillage de sortir des lumières oblongues des platines **21** de verrouillage.

La figure 1 représente la vue de la face extérieure d'une roue, équipée d'un module élémentaire en place, dont la jante et le voile sont configurés pour recevoir le dispositif, avec un étrier externe en **(1),** un levier de tension en **(2)** avec ses deux goussets en **(3)** sur lesquels il est articulé, son ressort de tension en **(4),** le boulon de fixation du levier de tension en **(5),** la nappe d'accrochage en **(6)** avec sa broche d'assemblage en **(7)** et son l'anneau de verrouillage en **(8),** les deux emplacements libres pour recevoir les étriers externes des modules élémentaires complémentaires en **(9),** avec les orifices des tubes d'assemblage correspondant en **(10),** et les orifices des écrous prisonniers en **(11)** sur le voile de la roue pour la fixation des leviers de tension, les extrémités **(20a)** des mailles de serrage.

La figure 2 représente la vue de la face interne de la roue, avec un étrier interne en **(12),** avec raccordée aux anneaux 13 sa nappe d'accrochage en **(6),** comportant sa broche d'assemblage en **(7)** et son anneau de verrouillage en **(8),** les deux emplacements libres pour recevoir les étriers internes des modules élémentaires complémentaires en **(14),** avec les orifices des tubes d'assemblage correspondant en **(10),** les extrémités **(20b)** des mailles de serrage.

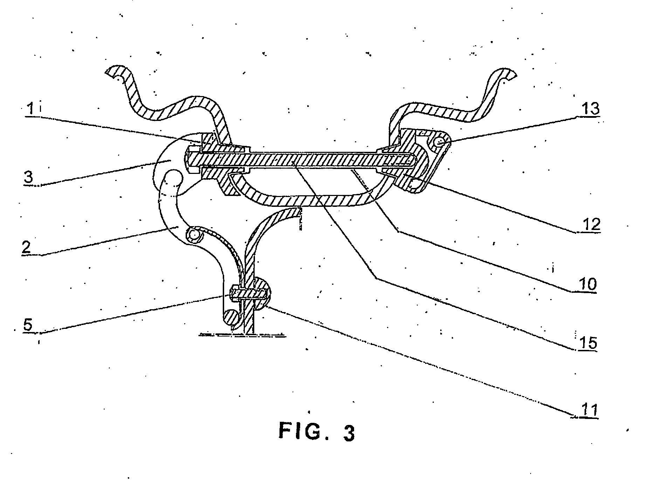

La figure 3 représente une coupe de la jante selon son axe de rotation, avec un étrier externe en **(1)** et l'étrier interne correspondant en **(12)** avec son anneau de fixation de la nappe d'accrochage en **(13),** un gousset d'articulation de levier de tension en **(3),** un levier de tension en **(2)** et son boulon de verrouillage en **(5)** avec l'écrou prisonnier sur le voile de la roue en **(11),** le tube d'assemblage en **(10)** et le boulon d'assemblage en **(15).**

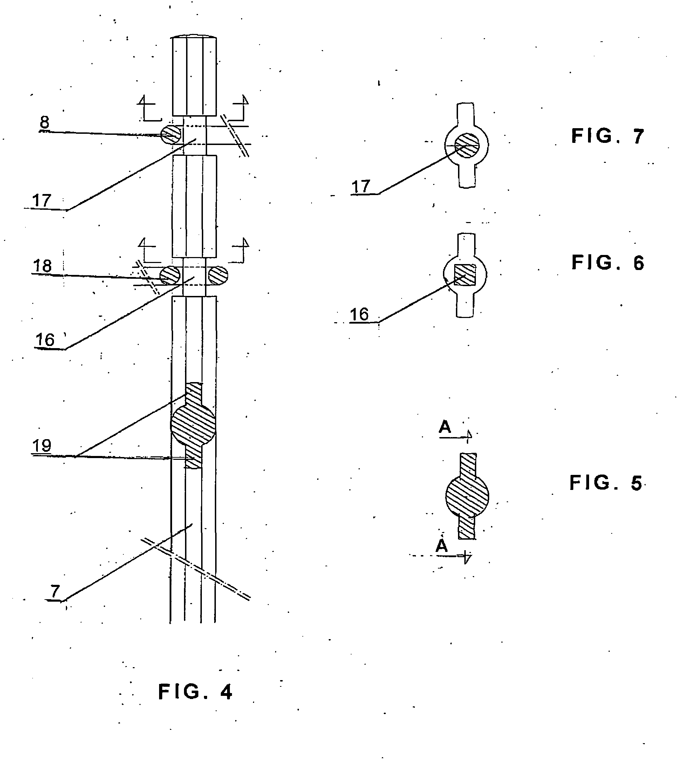

La figure 4 représente la vue en plan de l'about courant d'une broche d'assemblage en **(7),** avec une coupe radiale courante mentionnant la position respective des languettes en **(19),** une gorge intérieure en **(16),** une gorge extérieure en **(17).**

La figure 5 représente une coupe transversale courante de la broche 7 d'assemblage, mentionnant l'axe de symétrie AA passant par les languettes.

La figure 6 représente une coupe transversale sur une gorge 16 intérieure.

La figure 7 représente une coupe transversale sur une gorge 17 extérieure.

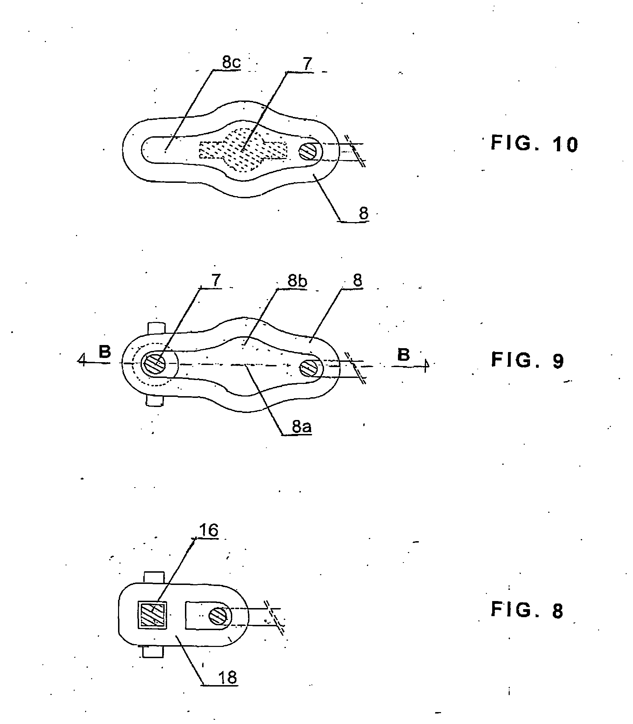

La figure 8 représente un anneau d'ancrage en (18) enserrant sa gorge intérieure en (16).

La figure 9 représente un anneau de verrouillage en (8) avec une broche d'assemblage en (7), en position de verrouillage.

La figure 10 représente la position respective d'un anneau de verrouillage en (8) et d'une broche d'assemblage en (7), en configuration d'assemblage.

La figure 11 représente une vue à plat d'un assemblage d'une nappe d'accrochage complète en (6) comprise entre deux broches d'assemblage voisines en (7), avec de part et d'autre une amorce de nappes d'accrochage, les mailles de serrage en (20) avec leurs extrémités en (20a) et (20b).

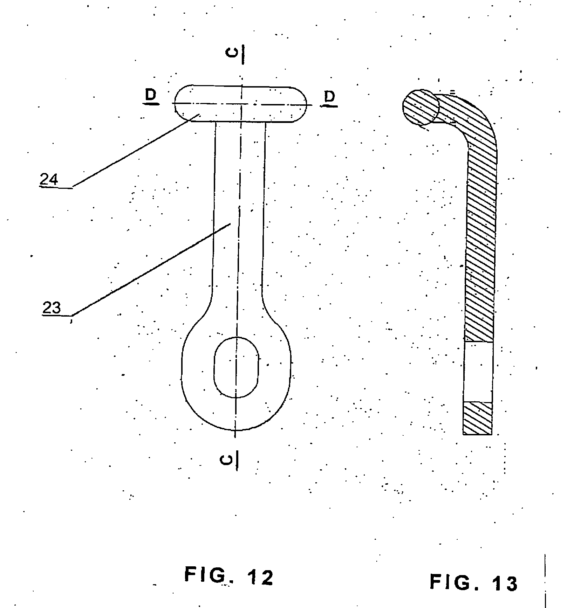

La figure 12 représente un anneau final en (23) s'étendant selon un axe longitudinal en (CC') et comprenant à une extrémité une ouverture pour y fixer une nappe, et surmonté à l'autre extrémité d'une barrette de verrouillage en (24).

La figure 13 représente en coupe longitudinale l'anneau 23 final et la barrette 24 de verrouillage.

La figure 14 représente, vue en plan, une portion d'une bande de roulement d'un pneumatique sur lequel un module comprenant une nappe d'accrochage composée de deux éléments en (6a) et (6b) est fixé. Le module comprend une platine de verrouillage en (21) reliée à un ressort de tension, lui-même relié à un levier de tension non représenté, la platine 21 de verrouillage comportant une ouverture oblongue; une platine de liaison en (22) reliée à l'anneau de fixation de l'étrier interne non représenté.

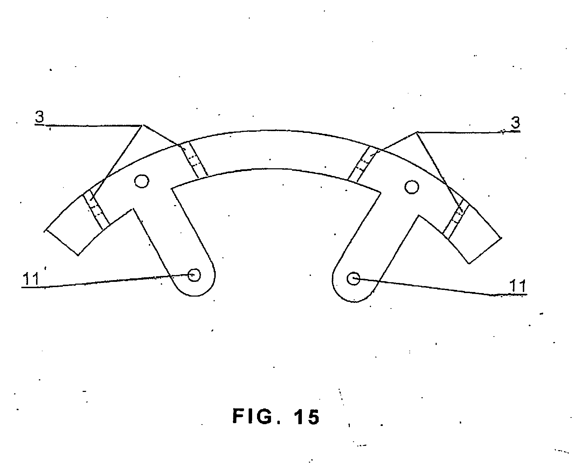

La figure 15 représente un étrier externe avec goussets d'articulation en (3) pour les leviers de tension, et deux pattes intégrant un trou taraudé en (11) pour fixation des leviers de tension.

## Revendications

1. Dispositif à fixer sur une roue de véhicule, afin d'améliorer son adhérence sur des sols meubles, enneigés ou verglacés ou pentus, la roue comprenant une jante et un pneumatique, le dispositif comprenant au moins deux modules élémentaires identiques entre eux, qui se fixent indépendamment les uns des autres sur le pourtour de la jante de la roue, chaque module comprenant :
- un étrier **(1)** externe et un étrier **(12)** interne pour la fixation respectivement sur les flancs externe et interne de la jante de la roue,
- des moyens d'assemblage avec au moins un autre module,
**caractérisé en ce que** chaque module comprend en outre au moins une nappe **(6)** d'accrochage fixée d'une part à l'étrier **(12)** interne et d'autre part à au moins un ressort **(4)** de tension, qui est solidaire d'un levier **(2)** de tension articulé sur l'étrier **(1)** externe et dont la mise en tension autour du pneumatique de la roue s'opère par le basculement du levier **(2)** de tension sur le voile de la jante.

2. Dispositif selon la revendication 1, dans lequel les moyens d'assemblage comprennent d'une part une broche **(7)** d'assemblage tenue par deux ou plusieurs anneaux **(18)** d'ancrage enserrant chacun une gorge **(16)** intérieure de la broche **(7)** d'assemblage, et d'autre part deux anneaux **(8)** de verrouillage, les anneaux **(8)** de verrouillage d'un premier module s'engageant chacun sur une gorge **(17)** extérieure de la broche **(7)** d'assemblage d'un deuxième module, permettant l'assemblage du premier module et du deuxième module.

3. Dispositif selon la revendication 2, dans lequel la broche **(7)** d'assemblage se présente sous la forme d'un profilé ayant une section transversale comportant deux languettes **(19)** opposées, chacune de ses deux portions extrêmes comportant une gorge **(17)** extérieure, formant chacune un rétrécissement de la section transversale de la broche **(7)** d'assemblage et dans lequel l'anneau **(8)** de verrouillage comprend une lumière **(8a)** oblongue dont une première dimension, selon le grand axe, est supérieure à la dimension de la section transversale de la broche **(7)** d'assemblage mesurée sur les deux languettes **(19),** la lumière **(8)** présentant une section **(8b)** élargie, pour l'introduction de la broche **(7)** d'assemblage dans la lumière **(8)** et une section **(8c)** rétrécie, pour le blocage de la broche **(7)** d'assemblage sur la gorge **(17)** extérieure.

4. Dispositif selon la revendication 1, dans lequel la nappe **(6)** d'accrochage comprend deux éléments **(6a, 6b),** et dans lequel les moyens d'assemblage comprennent une platine **(21)** de verrouillage munie d'une ouverture oblongue, fixée à une première extrémité d'un premier élément **(6a)** de la nappe **(6)** d'accrochage et un anneau **(23)** final surmonté d'une barrette **(24)** et fixé à une première extrémité du deuxième élément **(6b)** de la nappe **(6),** les deuxièmes extrémités des deux éléments **(6a, 6b)** de la nappe d'accrochage **(6)** étant fixées à une platine **(22)** de liaison elle-même fixée à l'étrier **(12)** interne, l'assemblage de deux modules étant obtenu par la coopération entre l'ouverture oblongue dans la platine **(21)** de verrouillage d'un premier module et l'anneau **(23)** final surmonté de la barrette **(24)** d'un deuxième module.

5. Dispositif selon l'une quelconque des revendications précédentes, dans lequel chaque module comprend un ou plusieurs boulons **(15)** d'assemblage passant chacun au travers d'un tube **(10)** d'assemblage aux embouchures tronconiques, le tube **(10)** d'assemblage étant apte à être solidaire de la jante et à la traverser de part en part, ou positionné en sous-face de la jante, se vissant sur l'étrier interne de manière à fixer le module sur la jante.

6. Dispositif selon la revendication 5, **caractérisé en ce que** les tubes **(10)** d'assemblage identiques entre eux traversant la jante de part en part ou disposés entre la jante et le voile, sont distribués à intervalles angulaires réguliers de telle sorte que chaque module élémentaire peut occuper indifféremment toute position de fixation sur la jante de la roue.

7. Dispositif selon l'une quelconque des revendications précédentes, dans lequel chaque module comprend un câble de sécurité dont les extrémités fixées à celles du ressort **(4)** de tension en limite l'allongement.

8. Dispositif selon l'une quelconque des revendications précédentes, dans lequel chaque module comprend des moyens de blocage du basculement du levier **(2)** de tension lorsque la nappe **(6)** d'accrochage est mise sous tension.

9. Dispositif selon l'une quelconque des revendications précédentes, **caractérisé en ce qu'**une variante de l'étrier externe intègre un écrou prisonnier **(11)** sur lequel se visse le boulon assurant la fixation du levier de tension.

10. Dispositif selon l'une quelconque des revendications précédentes, dans lequel la nappe **(6)** d'accrochage de chaque module comprend au moins une maille **(20)** de serrage dont une extrémité est fixée à un anneau **(13)** solidaire de l'étrier interne et l'extrémité opposée à un ou plusieurs ressorts **(4)** de tension solidaires d'un levier **(2)** de tension.

## Patentansprüche

1. Vorrichtung zum Befestigen auf dem Rad eines Fahrzeugs, die dazu dient dessen Haftreibung auf nachgiebigem, schneebedecktem, vereistem oder ansteigendem Boden zu verbessern, wobei das Rad eine Felge und einen Reifen enthält und die Vorrichtung mindestens zwei untereinander identische Grundmodule aufweist, die voneinander unabhängig auf dem Umfang der Radfelge befestigt werden, wobei jedes Modul jeweils folgende Teile enthält:
- einen Außenbügel (**1**) und einen Innenbügel (**12**), die jeweils zur Befestigung auf der äußeren und der inneren Seite der Radfelge dienen,
- Montagemittel zur Verbindung mit mindestens einem anderen Modul,
**dadurch gekennzeichnet, dass** jedes Modul zudem mindestens ein Haftnetz (**6**) aufweist, das auf einer Seite am Innenbügel (**12**) und auf der anderen Seite an mindestens einer Zugfeder (**4**) befestigt ist, wobei letztere mit einem gelenkig am Außenbügel (**1**) befestigten Spannhebel (**2**) verbunden ist und ihr Anspannen um den Radreifen durch Kippen des Hebels (**2**) auf den Radkörper erfolgt.

2. Vorrichtung nach Anspruch 1, bei der die Montagemittel einerseits einen Montagestab (**7**) umfassen, der von zwei oder mehr Verankerungsringen (**18**) gehalten wird, die jeweils eine innere Aussparung (**16**) des Montagestabs (**7**) umschließen, und andererseits zwei Verriegelungsringe (**8**), wobei die Verriegelungsringe (**8**) eines ersten Moduls jeweils in eine äußere Vertiefung (17) des Montagestabs (**7**) eines zweiten Moduls eingreifen und somit die Verbindung des ersten mit dem zweiten Modul ermöglichen.

3. Vorrichtung nach Anspruch 2, in welcher der Montagestab (**7**) so profiliert ist, dass sein Querschnitt zwei gegenüberliegende Ansätze (**19**) aufweist, jeder seiner beiden Endabschnitte eine äußere Vertiefung (**17**) enthält, welche beiden Vertiefungen eine Verjüngung des Querschnitts des Montagestabs (**7**) bilden, und in welcher der Verriegelungsring (**8**) eine längliche Öffnung (**8a**) aufweist, die in Richtung ihrer Hauptachse größer als die Länge des auf den beiden Ansätzen (**19**) gemessenen Querschnitts des Montagestabs (**7**) ist, wobei die Öffnung (**8**) ein aufgeweitetes Teil (**8b**) zum Einführen des Montagestabs (**7**) in diese Öffnung (**8**) aufweist und ein verjüngtes Teil (**8c**) zum Blockieren des Montagestabs (**7**) auf der äußeren Vertiefung (**17**).

4. Vorrichtung nach Anspruch 1, in welcher das Haftnetz (**6**) aus zwei Elementen (**6a**, **6b**) besteht und in welcher die Montagemittel eine Verriegelungsplatte (**21**) umfassen, die mit einer länglichen, an einem ersten Ende eines ersten Elements (**6a**) des Haftnetzes (**6**) befestigten Öffnung versehen ist, und einen Abschlussring (**21**) mit aufmontiertem Stab (**24**), der an einem ersten Ende des zweiten Elements (**6b**) des Haftnetzes (**6**) befestigt ist, wobei die zweiten Enden der zwei Elemente (**6a**, **6b**) des Haftnetzes (**6**) an einer Verbindungsplatte (**22**) befestigt sind, die ihrerseits am Innenbügel (**12**) befestigt ist, wonach die Verbindung der beiden Module durch Zusammenspiel der länglichen Öffnung in der Verriegelungsplatte (**21**) eines ersten Moduls und des Abschlussrings (**23**) mit aufmontiertem Stab (**24**) eines zweiten Moduls zustande kommt.

5. Vorrichtung nach einem beliebigen der vorangehenden Ansprüche, bei welcher jedes Modul eine oder zwei Montageschrauben (**15**) enthält, welche jeweils durch die Öffnungen an den verstärkten Enden eines Verbindungsrohrs (**10**) geführt sind, wobei das Verbindungsrohr (**10**) sich mit der Felge verbinden und diese von einer Seite zur anderen durchqueren kann, oder auf der Unterseite der Felge positioniert und so auf dem Innenbügel aufgeschraubt werden kann, dass das Modul auf der Felge befestigt wird.

6. Vorrichtung nach Anspruch 5, **dadurch gekennzeichnet, dass** die untereinander identischen, die Felge vollständig durchquerenden oder zwischen Felge und Radkörper angeordneten Verbindungsrohre (**10**) in gleichen Winkelabständen auf solche Weise verteilt sind, dass jedes Grundmodul eine beliebige der Befestigungsstellen auf dem Radreifen einnehmen kann.

7. Vorrichtung nach irgendeinem der vorangehenden Ansprüche, bei der jedes Modul ein Sicherheitsseil enthält, dessen Enden an der Spannfeder (**4**) befestigt sind und deren Spannung begrenzen.

8. Vorrichtung nach irgendeinem der vorangehenden Ansprüche, bei der jedes Modul Mittel enthält, welche die Kippung des Spannhebels (**2**) blockieren, wenn das Haftnetz (**6**) gespannt wird.

9. Vorrichtung nach irgendeinem der vorangehenden Ansprüche, die **dadurch gekennzeichnet ist, dass** eine Variante des Außenbügels eine eingefasste unverlierbare Mutter (**11**) enthält, in der die Schraube eingedreht werden kann, welche die Befestigung des Spannhebels sichert.

10. Vorrichtung nach irgendeinem der vorangehenden Ansprüche, bei der das Haftnetz (**6**) jeden Moduls zumindest ein Spannglied (**20**) enthält, dessen eines Ende an einem mit dem Innenbügel verbundenen Rings (**13**) befestigt ist, und dessen entgegengesetztes Ende an einer oder mehreren mit einem Spannhebel (**2**) verbundenen Spannfedern (**4**) befestigt ist.

## Claims

1. Device to be attached to the wheel of a vehicle, in order to improve its grip on loose, snowy, icy or sloping surfaces, the wheel comprising a rim and a tyre, the device comprising at least two identical basic modules, which are attached separately onto the surrounding edge of the wheel rim, each module comprising:
- an outer stirrup (**1**) and an inner stirrup (**12**) for attachment respectively onto the outer and inner sides of the wheel rim,
- means of assembly with at least one other module,
**characterised in that** each module additionally comprises at least one retaining layer **(6)** attached both to the inner stirrup **(12)** and to at least one tension spring **(4)**, which is connected to a tension lever **(2)** joined to the outer stirrup **(1)** and which is held taut around the tyre of the wheel by the pivotal movement of the tension lever **(2)** on the spider of the rim.

2. Device according to claim 1, in which the means of assembly comprise both a coupling pin (**7**) held in place by two or more anchoring rings (**18**) each fitting around an inner groove (**16**) of the assembly pin (**7**), and two locking pins (**8**) of a first module, the locking pins (**8**) each fitting onto an outer groove (**17**) of the assembly pin (**7**) of a second module, enabling assembly of the first module and the second module.

3. Device according to claim 2, in which the assembly pin (**7**) takes the form of a section with a transversal part containing two opposing tabs (**19**), each of its two tips containing an outer groove (**17**), each forming a tapering of the transversal part of the assembly pin (**7**) in which the locking pin (**8**) includes an oblong opening (**8a**) with a first dimension, along the main axis, which is higher than the dimension of the transversal part of the assembly pin (**7**) measured along the two tabs (**19**), the opening (**8**) having an expanded section (**8b**) for introduction of the assembly pin (**7**) into the opening (**8** and a tapered section (8c), for locking the assembly pin (**7**) in place on the outer groove (**17**).

4. Device according to claim 1, in which the retaining layer (**6**) comprises two elements (**6a**, **6b**), and in which the means of assembly comprise a locking plate (**21**) fitted with an oblong opening, attached at one tip with a first part (**6a**) of the retaining layer (**6**) and final ring (**23**) surmounted by a clip (**24**) and attached to a first tip of the second part (**6b**) of the layer (**6**), the two tips of the two parts (**6a**, **6b**) of the retaining layer (**6**) being attached to a connection plate (**22**), itself attached to the inner stirrup (**12**), assembly of the two modules being obtained through the interaction of the oblong opening in the locking plate (**21**) of a first module and the final ring (**21**) surmounted by the clip (**24**) of a second module.

5. Device according to any of the preceding claims, in which each module comprises one or more assembly bolts (**15**) each passing through an assembly tube (**10**) with truncated inlets, the assembly tube (**10**) being suitable for connection to the rim and crossing it in places, or positioned under the underside of the rim, screwing onto the inner stirrup so as to attach the module onto the rim.

6. Device according to claim 5, **characterised in that** the identical assembly tubes (**10**) crossing the rim in places or arranged between the rim and the spider are distributed at regular angular intervals in such a way that each basic module can equally well occupy any position of attachment on the wheel rim.

7. Device according to any of the preceding claims, in which each module comprises a safety cable whose tips, attached to those of the tension spring (4), restrict its extension.

8. Device according to any of the preceding claims, in which each module comprises a means of locking the pivotal movement of the tension lever (**2**) when the retaining layer (**6**) is taut.

9. Device according to any of the preceding claims, **characterised in that** a variant of the outer stirrup includes a captive nut (**11**) onto which is screwed the bolt holding the tension lever in place.

10. Device according to any of the preceding claims, in which the retaining layer (**6**) of each module comprises at least one tightening mesh (**20**), one tip of which is attached to a ring (**13**) connected to the inner stirrup and the opposite tip to one or more tension springs (**4**) connected to a tension lever (**2**).
